Europäisches Patentamt

European Patent Office

Office européen des brevets

(19)

(11) Veröffentlichungsnummer: **0 332 940**
**A1**

## (12) EUROPÄISCHE PATENTANMELDUNG

(21) Anmeldenummer: 89103616.2

(22) Anmeldetag: 02.03.89

(51) Int. Cl.⁴: **C01B 25/41**

(30) Priorität: 16.03.88 DE 3808732

(43) Veröffentlichungstag der Anmeldung:
20.09.89 Patentblatt 89/38

(84) Benannte Vertragsstaaten:
**BE DE ES FR GB IT NL SE**

(71) Anmelder: **HOECHST AKTIENGESELLSCHAFT**
**Postfach 80 03 20**
**D-6230 Frankfurt am Main 80(DE)**

(72) Erfinder: **Kowalski, Werner**
**Am Ginsterberg 7**
**D-5354 Metternich(DE)**
Erfinder: **Landgräber, Herbert, Dr.**
**Schaesbergstrasse 1**
**D-5030 Hürth(DE)**
Erfinder: **Ehlers, Klaus-Peter, Dr.**
**Am Steinfeld 5**
**D-5042 Erftstadt(DE)**

(54) **Verfahren zur Herstellung von Natriumtripolyphosphat.**

(57) Zur Herstellung von Natriumtripolyphosphat bringt man eine Natriumorthophosphatlösung mit einem $Na_2O : P_2O_5$-Verhältnis von etwa 5 : 3, welche zusätzlich eine Kalium-Ionen liefernde Verbindung enthält, in den oberen Teil eines Sprühturmes ein und versprüht die Natriumorthophosphatlösung darin mittels mindestens einer Düse durch eine von mehreren, kreisförmig angeordneten Brennern erzeugte Flammzone. Das trockene Alkalitripolyphosphat wird im unteren Teil des Sprühturmes gesammelt.

EP 0 332 940 A1

# Verfahren zur Herstellung von Natriumtripolyphosphat

Die vorliegende Erfindung betrifft ein Verfahren zur Herstellung von Natriumtripolyphosphat durch Einbringen einer Natriumorthophosphatlösung mit einem $Na_2O : P_2O_5$-Verhältnis von etwa 5 : 3 in den oberen Teil eines Sprühturmes, Versprühen der Natriumorthophosphatlösung im Sprühturm mittels mindestens einer Düse durch eine von mehreren, kreisförmig angeordneten Brennern erzeugte Flammzone und Sammeln des trockenen Alkalitripolyphosphates im unteren Teil des Sprühturmes.

Es ist bekannt, Alkalipolyphosphate durch Versprühen von wäßrigen Alkaliphosphatlösungen, welche auf das entsprechende Alkalioxid-$P_2O_5$-Verhältnis eingestellt sind, in einem zylindrischen Sprühturm zu erhalten. Dabei wird der Deckel des Sprühturmes von Brenngaszuleitungen und zentrisch von einem Zuführungsrohr für die Alkaliphosphatlösung durchdrungen, welches in einer oder mehreren Düsen endet. Auf einer zum Zuführungsrohr konzentrischen Kreislinie wird der Deckel von mehreren, mit Abstand voneinander angeordneten Brennern durchdrungen, wobei die zerstäubte Alkaliphosphatlösung beim Passieren der vom Brennerkranz erzeugten Flammzone zunächst eingedampft und anschließend die Phosphate kondensiert werden. Schließlich werden die kondensierten Phosphate im unteren Bereich des Sprühturmes gesammelt, bevor sie an dessen Spitze entnommen werden (vergl. US-PS 3 499 476; US-PS 4 501 639).

Natriumtripolyphosphat existiert in zwei wasserfreien kristallinen Formen (Phase I, Phase II) und als ein kristallines Hexahydrat. Die beiden wasserfreien Formen gehen in Kontakt mit Wasser in die Hexahydrat-Form über, jedoch mit unterschiedlicher Geschwindigkeit der Wasseraufnahme (vergl. VAN WAZER: "Phosphorus and its Compounds", Band I, 1958, Seiten 638 bis 646).

Technisches Natriumtripolyphosphat besteht in der Regel aus einem Gemisch von Phase I und Phase II, wobei zur Änderung des Gehaltes der beiden Phasen die Temperatur bei der Herstellung des Natriumtripolyphosphates variiert werden muß: Die Phase I (Hochtemperaturform) entsteht bei höherer Temperatur, während sich die Phase II bei Temperaturen unter 350°C in Anwesenheit von Wasserdampf aus der Phase I bildet. Temperatur und Wasserdampfgehalt im Sprühturm sind weiterhin für den $Na_5P_3O_{10}$-Gehalt des Sprühproduktes von ausschlaggebender Bedeutung.

Kommt es im Sprühturm zu örtlicher Überhitzung oder infolge zu hohen Wasserdampf-Partialdruckes örtlich zu zu geringer Wärme-Konzentration, so laufen Fehlreaktionen unter Bildung von neutralen oder sauren Pyrophosphaten sowie verschiedenen Metaphosphaten ab. In Folgereaktionen bilden sich aus diesen Phosphaten höher kondensierte Phosphate vom Typ $Na_{n+2}P_nO_{3n+1}$ mit n = 4 und größer; welche nur teilweise wasserlöslich sind.

Natriumtripolyphosphate, welche höher kondensierte Phosphate enthalten, sind nicht klar wasserlöslich und daher zur Herstellung von beispielsweise flüssigen Wasch- und Reinigungsmitteln nicht verwendbar.

Es ist daher Aufgabe der vorliegenden Erfindung, ein Verfahren zur Herstellung von Natriumtripolyphosphat aus einer Natriumorthophosphatlösung mit einem $Na_2O : P_2O_5$-Verhältnis von etwa 5 : 3 anzugeben, bei welchem das Natriumtripolyphosphat keine höher kondensierten Phosphate enthält. Das wird erfindungsgemäß dadurch erreicht, daß man der Natriumorthophosphatlösung eine Kalium-Ionen lie fernde Verbindung zusetzt.

Das Verfahren gemäß der Erfindung kann weiterhin wahlweise auch noch dadurch ausgestaltet sein, daß

a) man 0,1 bis 0,7 Gew.-%, vorzugsweise 0,2 bis 0,4 Gew.-%, Kalium-Ionen, bezogen auf den $P_2O_5$-Gehalt der Natriumorthophosphatlösung, zusetzt;

b) als Kalium-Ionen liefernde Verbindung Kaliumhydroxid dient;

c) als Kalium-Ionen liefernde Verbindungen Kaliumsalze dienen;

d) Kaliumnitrat verwendet ist;

e) Kaliumphosphat verwendet ist;

f) Kaliumsulfat verwendet ist;

g) Kaliumcarbonat verwendet ist.

Beim erfindungsgemäßen Verfahren kann als Kaliumsalz prinzipiell auch Kaliumchlorid verwendet werden; jedoch treten bei seiner Verwendung Korrosionsprobleme auf, wenn der Sprühturm aus austenitischem Stahl gebaut ist.

Das nach dem Verfahren gemäß der Erfindung erhaltene Natriumtripolyphosphat ist in Wasser ohne Trübung klar löslich.

In den folgenden Beispielen wurde die Klarlöslichkeit dadurch bestimmt, daß 40 g Natriumtripolyphosphat in 500 ml demineralisiertem Wasser gelöst wurden. Diese 8 %ige wäßrige Lösung wurde zur Bestimmung ihrer Lichtadsorption in eine 2 cm-Küvette eingefüllt und in einem Photometer mit Licht einer Wellenlänge von 435 nm gemessen. Beträgt die Absorption mehr als 7 %, so ist mit dem Auge eine weißliche Trübung der Lösung wahrnehmbar. Enthält die Lösung mehr als 0,2 Gewichts% höherkondensierte Phosphate, so verstärkt sich die Trübung der Lösung soweit, daß sie opalisiert; nach längerem Stehen bildet sich am Boden des Gefäßes ein lockerer Niederschlag aus.

Beispiel 1 (Vergleichsbeispiel)

30000 kg Natriumorthophosphatlösung mit einem $P_2O_5$-Gehalt von 30,3 Gewichts% und einem Na : P-Verhältnis von 1,666 : 1 (66,6 % $Na_2HPO_4$ und 33,4 % $NaH_2PO_4$) wurden in einem Sprühturm versprüht. Stündlich wurden 12750 kg Lösung bei einer Temperatur der Turm-Abgase von 345° C versprüht. Das resultierende Natriumtripolyphosphat wurde aus dem unteren Teil des Sprühturmes abgezogen und in einer mit Wasser indirekt gekühlten Drehtrommel auf etwa 40° C abgekühlt. Stündlich wurden 6684 kg Natriumtripolyphosphat mit einem Gehalt an $Na_5P_3O_{10}$ von 96,7 % und an Phase I von 8,8 % hergestellt. Die Lichtabsorption der 8 %igen wäßrigen Lösung betrug 6,5 %.

Beispiel 2 (Vergleichsbeispiel)

Beispiel 1 wurde mit der Änderung wiederholt, daß die Temperatur des Turm-Abgase 410° C betrug. Dabei fielen 6684 kg/h Natriumtripolyphosphat mit einem Gehalt an $Na_5P_3O_{10}$ von 98,7 % und an Phase I von 63 % an, dessen 8 %ige wäßrige Lösung eine Lichtabsorption von 9,8 % aufwies.

Beispiel 3 (Vergleichsbeispiel)

30000 kg Natriumorthophosphatlösung mit einem $P_2O_5$-Gehalt von 27,8 Gewichts% und einem Na : P-Verhältnis von 1,666 : 1 wurden in einem Sprühturm versprüht, wobei die Temperatur der Turm-Abgase 345° C betrug. Bei einer Sprühleistung von 12750 kg/h Lösung wurden 6132 kg/h Natriumtripolyphosphat mit einem Gehalt an $Na_5P_3O_{10}$ von 96,0 % und an Phase I von 10,3 % hergestellt.
Die Lichtabsorption der 8 %igen wäßrigen Lösung betrug 13,4 %.

Beispiel 4 (Vergleichsbeispiel)

Beispiel 3 wurde mit der Änderung wiederholt, daß die Temperatur der Turmabgase auf 440° C erhöht wurde.
Die so stündlich hergestellten 6132 kg Natriumtripolyphosphat wiesen einen Gehalt an $Na_5P_3O_{10}$ von 97.5 % und an Phase I von 65 % auf. Die Lichtabsorption der 8 %igen wäßrigen Lösung betrug 19.2 %.

Beispiel 5 (gemäß der Erfindung)

Beispiel 1 wurde mit der Änderung wiederholt, daß den 30000 kg Natriumorthophosphatlösung 45,5 kg Kaliumnitrat zugesetzt wurden.
Stündlich wurden 6700 kg Natriumtripolyphosphat mit einem Gehalt an $Na_5P_3O_{10}$ von 97,1 % und an Phase I von 8,8 % hergestellt. Die Lichtabsorption der 8 %igen wäßrigen Lösung betrug 1,1 %.

Beispiel 6 (gemäß der Erfindung)

Beispiel 2 wurde mit der Änderung wiederholt, daß den 30000 kg Natriumorthophosphatlösung 45,5 kg Kaliumnitrat zugesetzt wurden.
Stündlich wurden 6700 kg Natriumtripolyphosphat mit einem Gehalt an $Na_5P_3O_{10}$ von 98,7 % und an Phase I von 66 % hergestellt. Die Lichtabsorption der 8 %igen wäßrigen Lösung betrug 1,2 %.

Beispiel 7 (gemäß der Erfindung)

Beispiel 3 wurde mit der Änderung wiederholt, daß den 30000 kg Natriumorthophosphatlösung 41,7 kg Kaliumnitrat zugesetzt wurden.
Stündlich wurden 6150 kg Natriumtripolyphosphat mit einem Gehalt an $Na_5P_3O_{10}$ von 96,1 % und an Phase I von 10 % hergestellt. Die Lichtabsorption der 8 %igen wäßrigen Lösung betrug 1,0 %.

Beispiel 8 (gemäß der Erfindung)

Beispiel 4 wurde mit der Änderung wiederholt, daß den 30000 kg Natriumorthophosphatlösung 41,7 kg Kaliumnitrat zugesetzt wurden.
Stündlich wurden 6150 kg Natriumtripolyphosphat mit einem Gehalt an $Na_5P_3O_{10}$ von 98,1 % und an Phase I von 66 % hergestellt. Die Lichtabsorption der 8 %igen wäßrigen Lösung betrug 1,0 %.

Beispiel 9 (gemäß der Erfindung)

Beispiel 4 wurde mit der Änderung wiederholt, daß den 30000 kg Natriumorthophosphatlösung 40 kg Kaliumnitrat zugesetzt wurden.
Stündlich wurden 6160 kg Natriumtripolyphosphat mit einem Gehalt an $Na_5P_3O_{10}$ von 98,1 % und an Phase I von 66 % hergestellt. Die Lichtabsorption der 8 %igen wäßrigen Lösung betrug 1,0 %.

Beispiel 10 (gemäß der Erfindung)

Zu 30000 kg einer Natriumorthophosphatlösung mit einem $P_2O_5$-Gehalt von 27,8 % und einem durch Titration ermittelten Na : P-Verhältnis von 1,666 : 1 wurden 30 kg Kaliumcarbonat hinzugefügt. Danach wurde das Alkali : P-Verhält nis titrimetrisch zu 1,669 : 1 bestimmt. Zur Rückstellung dieses Verhältnisses auf 1,666 : 1 wurden 55 l 75 %ige Orthophosphorsäure ($\hat{=}$ 45 kg $P_2O_5$) zugegeben, bevor die Lösung in einem Turm mit einer Sprühleistung von 8576 l/h bei einer Temperatur der Turm-Abgase von 440°C versprüht wurde.

Stündlich wurden 6220 kg Natriumtripolyphosphat mit einem Gehalt an $Na_5P_3O_{10}$ von 97,9 % und an Phase I von 65 % hergestellt. Die Lichtabsorption der 8 %igen wäßrigen Lösung betrug 1,1 %.

**Ansprüche**

1. Verfahren zur Herstellung von Natriumtripolyphosphat durch Einbringen einer Natriumorthophosphatlösung mit einem $Na_2O$ : $P_2O_5$-Verhältnis von etwa 5 : 3 in den oberen Teil eines Sprühturmes, Versprühen der Natriumorthophosphatlösung im Sprühturm mittels mindestens einer Düse durch eine von mehreren, kreisförmig angeordneten Brennern erzeugte Flammzone und Sammeln des trockenen Alkalitripolyphosphates im unteren Teil des Sprühturmes, dadurch gekennzeichnet, daß man der Natriumorthophosphatlösung eine Kalium-Ionen liefernde Verbindung zusetzt.

2. Verfahren nach Anspruch 1, dadurch gekennzeichnet, daß man 0,1 bis 0,7 Gew.-%, vorzugsweise 0,2 bis 0,4 Gew.-%, Kalium-Ionen, bezogen auf den $P_2O_5$-Gehalt der Natriumorthophosphatlösung, zusetzt.

3. Verfahren nach Anspruch 1 oder 2, dadurch gekennzeichnet, daß als Kalium-Ionen liefernde Verbindung Kaliumhydroxid dient.

4. Verfahren nach Anspruch 1 oder 2, dadurch gekennzeichnet, daß als Kalium-Ionen liefernde Verbindungen Kaliumsalze dienen.

5. Verfahren nach Anspruch 4, dadurch gekennzeichnet, daß Kaliumnitrat verwendet ist.

6. Verfahren nach Anspruch 4, dadurch gekennzeichnet, daß Kaliumphosphat verwendet ist.

7. Verfahren nach Anspruch 4, dadurch gekennzeichnet, daß Kaliumsulfat verwendet ist.

8. Verfahren nach Anspruch 4, dadurch gekennzeichnet, daß Kaliumcarbonat verwendet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 071 040 (HOECHST AG) <br> * Anspruch 1 *; & US - A - 45 01639 <br> --- | 1 | C 01 B 25/41 |
| Y | DE-B-1 767 733 (MONSANTO CO) <br> * Ansprüche 1-3 * | 1 | |
| X | <br> --- | 2-4,6,8 | |
| A | DE-B-1 767 488 (FMC CORP.) <br> * Ansprüche 1-2 * <br> --- | 1 | |
| A | EP-A-0 060 403 (HOECHST AG) <br> * Anspruch 1 * <br> --- | 1 | |
| A | DE-B-2 011 445 (CHEMISCHE WERKE ALBERT) <br> * Ansprüche 1-5 * <br> --- | 1 | |
| A | EP-A-0 112 521 (HOECHST AG) <br> * Anspruch 1 * <br> ----- | | |

**RECHERCHIERTE SACHGEBIETE (Int. Cl.4)**

C 01 B 25/00

**Der vorliegende Recherchenbericht wurde für alle Patentansprüche erstellt**

| Recherchenort | Abschlußdatum der Recherche | Prüfer |
|---|---|---|
| BERLIN | 18-05-1989 | CLEMENT J.P. |